# EUROPÄISCHE PATENTANMELDUNG

(11) **EP 1 209 494 A2**
(43) Veröffentlichungstag der Anmeldung: **29.05.2002**
(21) Anmeldenummer: 01126495.9
(22) Anmeldetag: 12.11.2001
(51) Int. Cl.: G02B 6/138, G02B 6/12

(54) **Integriert-optisches Wellenleiterbauteil sowie Verfahren zu seiner Herstellung**

(30) Priorität: 16.11.2000 DE 10056834
(71) Anmelder: Harting Elektro-Optics GmbH & Co. KG., 32339 Espelkamp (DE)
(72) Erfinder: Marheine, Carsten, Dr., 31141 Hildesheim (DE); Pompe, Guido, Dr., 81245 München (DE)
(74) Vertreter: Sties, Jochen, Dipl.-Ing.

(57) **Zusammenfassung**

Die Erfindung betrifft ein integriert-optisches Wellenleiterbauteil mit einem Substrat (10) und mindestens einem Wellenleitergraben (12), der in dem Substrat (10) ausgebildet ist, dadurch gekennzeichnet, daß in dem Substrat mindestens eine Vorratskammer (14) ausgebildet ist, die mit dem Wellenleitergraben (12) durch einen in dem Substrat ausgebildeten Befüllkanal (16) in Verbindung steht. Die Erfindung betrifft auch ein Verfahren zur Herstellung eines integriert-optischen Wellenleiterbauteils mittels der folgenden Schritte: Es wird ein Substrat (10) bereitgestellt, das mit mindestens einem Wellenleitergraben (12), einer Vorratskammer (14) und einem Befüllkanal (16) versehen ist, der den Wellenleitergraben (12) mit der Vorratskammer (14) verbindet. Dann wird in die Vorratskammer (14) eine vorbestimmte Menge eines aushärtbaren, optisch transparenten Wellenleitermaterials (22) eingebracht. Anschließend wird gewartet, bis das Wellenleitermaterial (22) aus der Vorratskammer (14) durch den Befüllkanal (16) in den Wellenleitergraben (12) fließt und diesen ausfüllt. Schließlich wird das Wellenleitermaterial (22) ausgehärtet.

## Beschreibung

Die Erfindung betrifft ein integriert-optisches Wellenleiterbauteil mit einem Substrat und mindestens einem Wellenleitergraben, der in dem Substrat ausgebildet ist. Die Erfindung betrifft ferner ein Verfahren zur Herstellung eines solchen Wellenleiterbauteils.

Solche Wellenleiterbauteile können beispielsweise auf den Gebieten der Faseroptik, der integrierten Optik, der Optoelektronik, der optischen Nachrichtentechnik, der optischen Datenübertragung und der optischen Sensorik verwendet werden.

Es ist bekannt, solche Wellenleiterbauteile mit Single-Mode-Wellenleitern (auch bezeichnet als integriert-optische Chips) aus Lithiumniobat, Glas (lonenaustauschverfahren) und Polymeren mit Methoden und Anlagen der Mikroelektronik zu fertigen (Ätztechnik, Photolithographie). Als Substrate dienen Wafer, die in diesen Anlagen be- und verarbeitet werden können. Nach der Prozessierung werden die Chips durch Zersägen der Wafer vereinzelt. Aus einem 4-Zoll-Wafer erhält man am Prozeßende typischerweise etwa 100 Chips.

Um zu höheren Ausbeuten zu kommen, hat man das Spritzgußverfahren für die CD-Herstellung auf die Herstellung der Substrate für integriert-optische Chips adaptiert. Der Vorteil liegt in der nur einmal erforderlichen, aufwendigen Herstellung einer Masterstruktur, die dann nahezu beliebig oft kopiert werden kann. Hat man nun die Substrate in großer Stückzahl vorliegen, müssen die darauf befindlichen Wellenleitergräben in einem effizienten Verfahren befüllt werden.

Zur Befüllung der Wellenleitergräben wird meistens mit einem Deckel gearbeitet, der das Wellenleitermaterial in die Wellenleitergräben des Substrates preßt und dort während der Aushärtung verbleibt. Auf diese Weise ist aber keine Massenproduktion mit hoher Ausbeute möglich. Ferner nimmt bei dieser Vorgehensweise die Oberfläche des Wellenleiters die Rauheit des Deckels an. Daraus folgt, daß der Deckel gesondert behandelt, gereinigt oder regelmäßig ausgetauscht werden muß, da Rauheit die Wellenleiterdämpfung erhöht.

Die Aufgabe der Erfindung besteht darin, ein integriert-optisches Wellenleiterbauteil aus Kunststoff, insbesondere mit Single-Mode-Wellenleiter, sowie ein Verfahren zu seiner Herstellung zu schaffen, das für eine Massenproduktion mit hoher Ausbeute bei geringen Kosten geeignet ist.

Zur Lösung dieser Aufgabe ist bei einem Wellenleiterbauteil der eingangs genannten Art vorgesehen, daß in dem Substrat mindestens eine Vorratskammer ausgebildet ist, die mit dem Wellenleitergraben durch einen in dem Substrat ausgebildeten Befüllkanal in Verbindung steht. Zur Lösung dieser Aufgabe ist auch ein Verfahren vorgesehen, das die folgenden Schritte enthält: Es wird ein Substrat bereitgestellt, das mit mindestens einem Wellenleitergraben, einer Vorratskammer und einem Befüllkanal versehen ist, der den Wellenleitergraben mit der Vorratskammer verbindet. In die Vorratskammer wird eine vorbestimmte Menge eines aushärtbaren, optisch transparenten Wellenleitermaterials eingebracht. Dann wird gewartet, bis das Wellenleitermaterial aus der Vorratskammer durch den Befüllkanal in den Wellenleitergraben fließt und diesen ausfüllt. Anschließend wird das Wellenleitermaterial ausgehärtet.

Das erfindungsgemäße Wellenleiterbauteil und das erfindungsgemäße Verfahren beruhen auf der Erkenntnis, daß sich Wellenleitergräben kleiner 100µm Breite, insbesondere Wellenleitergräben mit ca. 5µm Breite für Single-Mode-Anwendungen, ohne Anpreßdeckel mit einem Kleber füllen lassen, der nach dem Aushärten den Wellenleiter bildet. Der Kleber füllt den Wellenleitergraben von selbst bündig bis zur Oberfläche des Substrats, ohne an der Oberfläche einen Miniskus auszubilden. Dies ist insofern überraschend, da bei den Kapillarkräften und elektrostatischen Kräften, die bei den verwendeten Abmessungen herrschen, nicht erwartet werden konnte, daß ein Kleber einen Wellenleitergraben entlangfließt, der 500 mal so lang wie breit ist.

Das erfindungsgemäße Wellenleiterbauteil und das erfindungsgemäße Verfahren zu seiner Herstellung ermöglicht es, die Wellenleitergräben automatisch reproduzierbar und mit hoher Ausbeute zu befüllen und das Material auszuhärten. Dabei können die Vorteile der Kunststoffspritzprägetechnik (oder alternativer, vergleichbarer Technologien) als Massenproduktionstechnik mit preisgünstigem Rohstoff genutzt werden. Die hohe Wirtschaftlichkeit beruht zum einen auf der Tatsache, daß die Vorratskammer eine vergleichsweise großflächige Kleber-Aufnahmestruktur bildet, mit mit einem herkömmlichen Dosierautomaten gefüllt werden kann. Die hohe Wirtschaftlichkeit beruht zum anderen darauf, daß keinerlei Deckelstruktur bereitgestellt und gehandhabt werden muß, mit der nach dem Stand der Technik der Kleber in die Gräben gedrückt wird.

Ein weiterer Vorteil besteht darin, daß bei der Weiterverarbeitung, insbesondere bei der Ankopplung von Lichtleitern an den Chip, herkömmliche, ausgereifte Verfahren genutzt werden können. Als Lichtleiter können Glasfaserbändchen verwendet werden, die mittels bekannter Verfahren automatisch aktiv mit den Wellenleitern des Chips gekoppelt werden, so daß fasergekoppelte Chips mit Single-Mode-Wellenleitern erhalten werden. Diese werden abschließend mit einer Deckschicht überzogen.

Als Material für das Substrat kann jedes geeignete optische Gußmaterial verwendet werden, insbesondere Polymermaterial.

Gemäß einer bevorzugen Ausführungsform der Erfindung weist das Substrat eine dem Wellenleitergraben zugeordnete Stirnfläche mit optischer Qualität auf, und der Wellenleitergraben endet vor der Stirnfläche. Anders ausgedrückt ist der Wellenleitergraben von der Stirnfläche durch einen Substratsteg getrennt. Dieser Substratsteg kann eine Breite von etwa 10 bis 20 µm haben. Der Substratsteg verhindert, daß das in den Wellenleitergraben eingefüllte Wellenleitermaterial aus den Graben herausläuft. Die Breite des Substratstegs ist für die Ankopplung von Glasfasern an Single-Mode-Wellenleiter tolerierbar, da sich das Lichtbündel in Ausbreitungsrichtung nur sehr allmählich aufweitet. Die Aufweitung führt beispielsweise bei einer Breite des Steges von 15 µm zu einer zusätzlichen Dämpfung von 0,1 dB. Die Stirnfläche in optischer Qualität kann entweder unmittelbar durch den Abformprozeß erhalten werden, wenn die Wände der Formkavität mit entsprechend geringer Rauigkeit ausgeführt sind, oder durch einen Säge-/Polierschnitt mit einem Poliersägeblatt.

Geeignete Abmessungen bei einem Chip mit Single-Mode-Wellenleiter sind Breiten von etwa 5 bis 10 µm für den Wellenleitergraben und Kantenlängen in der Größenordnung von 1000 µm für die Vorratskammer. Ab einer bestimmten Länge des Wellenleitergrabens ist es erforderlich, mehrere Befüllkanäle vorzusehen, damit das Wellenleitermaterial vollständig durch den Wellenleitergraben fließen kann. Es ist jedoch bei der oben genannten Breite für den Wellenleitergraben ausreichend, wenn die Befüllkanäle in einem Abstand von etwa 5 mm in den Wellenleitergraben münden.

Wenn anstelle von Single-Mode-Lichtleitfasern Fasern mit einem Durchmesser von 50 oder 62,5 µm verwendet werden sollen, liegt eine geeignete Breite für die Wellenleitergräben in der Größenordnung von 35 bis 50 µm. Das Volumen der Vorratskammer kann dasselbe bleiben wie bei schmaleren Wellenleitergräben; somit sind Kantenlängen in der Größenordnung von 1000 µm geeignet.

Gemäß einer bevorzugten Ausführungsform des erfindungsgemäßen Verfahrens ist vorgesehen, daß das Wellenleitermaterial während des Schrittes des Wartens, also während es durch den Wellenleitergraben fließt, erwärmt wird. Dies kann dadurch geschehen, daß das Wellenleitermaterial einer Infrarotstrahlung ausgesetzt wird. Auf diese Weise erhöht sich die Fließgeschwindigkeit des Wellenleitermaterials, was die Prozeßzeiten und damit die Kosten senkt.

Gemäß einer Variante zur bevorzugten Ausführungsform der Erfindung endet der Wellenleitergraben in einer Stirnfläche des Substrates. Um ein Austreten des Wellenleitermatrials aus dem Wellenleitergraben zu verhindern, wird vor dem Einfüllen des Wellenleitermaterials in die Vorratskammer der Wellenleitergraben an der Stirnfläche verschlossen. Hierfür kann entweder eine transparente Folie verwendet werden, die nach dem Aushärten des Wellenleitermaterials auf der Stirnfläche verbleibt, oder eine beliebige, nicht transparente Abdeckung mit ausreichender Oberflächengüte, die nach dem Aushärten des Wellenleitermaterials wieder entfernt wird.

Alternativ wäre auch denkbar, daß sich an die Stirnseite, in welcher der Wellenleitergraben mündet, eine V-förmige Aufnahme für Lichtleitfasern anschließt und daß der Wellenleitergraben direkt mit den Lichtleitfasern bzw. Glasfaserbändchen abgeschlossen wird, die in V-Nuten der Aufnahme eingeklebt sind.

Vorteilhafte Ausgestaltungen der Erfindung ergeben sich aus den Unteransprüchen.

Die Erfindung wird nachfolgend anhand einer bevorzugen Ausführungsform beschrieben, die in den beigefügten Zeichnungen dargestellt ist. In diesen zeigen:
- Figur 1 in einer perspektivischen Ansicht einen Formeinsatz, der zum Abformen des Substrats des Wellenleiterbauteils verwendet werden kann;
- Figur 2 in einer perspektivischen Ansicht ein abgeformtes Substrat;
- Figur 3 in einer schematischen Schnittansicht entlang der Linie III von Figur 2 ein Substrat während des Befüllens des Wellenleitergrabens;
- Figur 4 in einer schematischen Draufsicht eine Variante des Substrats mit einer Vorrichtung zum Befüllen der Wellenleitergräben;
- Figur 5 in einer perspektivischen Ansicht ein Magazin mit mehreren Substraten; und
Figur 6 in einer schematischen Ansicht eine Kammer, die bei der Herstellung der erfindungsgemäßen Wellenleiterbauteile verwendet werden kann.

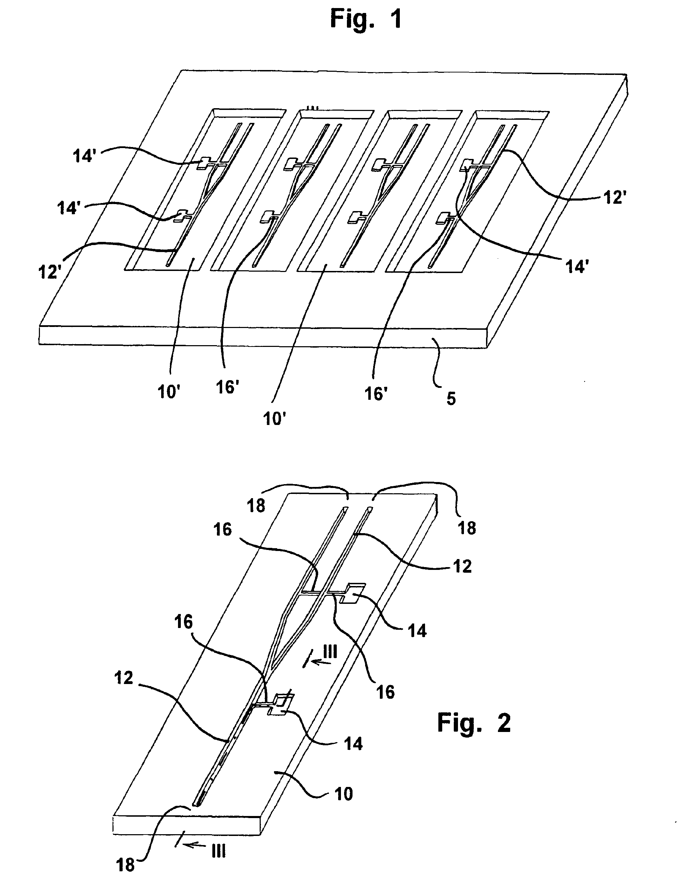

In Figur 1 ist schematisch ein Formeinsatz 5 gezeigt, der zur Herstellung von Substraten dient, die später beschrieben werden. Das Masterteil kann beispielsweise nach dem LIGA-Verfahren oder dem SIGA-Verfahren hergestellt sein, also durch Abformen und Umkopieren eines Silizium-Masters. Auf diese Weise lassen sich Strukturen mit sehr kleinen Abmessungen, aber hoher Genauigkeit herstellen.

Das Masterteil 5 weist bei dem dargestellten Beispiel vier Formkavitäten 10' auf, die jeweils Abmessungen haben, die denen des herzustellenden Substrats entsprechen. Jede Formkavität ist auf ihrer Unterseite mit erhabenen Stegen 12' versehen, die später als Wellenleitergraben im Substrat abgeformt werden. Es sind ferner zwei erhabene Rechtecke 14' vorgesehen, die jeweils durch einen Verbindungssteg 16' mit dem Steg 12' verbunden sind.

In Figur 2 ist ein Substrat gezeigt, das von einer Formkavität 10' abgeformt wurde. Das Substrat 10 weist einen sich verzweigenden Wellenleitergraben 12 auf, dessen Breite und Tiefe in der Größenordnung von 5 bis 10 µm beträgt. Der Wellenleitergraben ist an jedem Ende durch einen Substratsteg 18 von der entsprechenden Stirnseite des Substrats 10 getrennt. Im Substrat sind außerdem zwei Vorratskammern 14 ausgebildet, die hier eine quadratische Form mit einer Kantenlänge von etwa 100 bis 200 µm haben. Jede Vorratskammer 14 ist mit dem Wellenleitergraben 12 durch einen Befüllkanal 16 verbunden, dessen Abmessungen etwa denjenigen des Wellenleitergrabens entsprechen und der sich etwa senkrecht zu dem Wellenleitergraben erstreckt. Der in Figur 2 weiter oben angeordnete Befüllkanal 16 kreuzt den näher an der Vorratskammer 14 liegenden Ast des Wellenleitergrabens, um auch den entfernteren Ast zu erreichen. Die Befüllkanäle 16 münden in dem Wellenleitergraben im Abstand von etwa 5 mm, um ein gleichmäßiges Befüllen des Wellenleitergrabens zu erzielen.

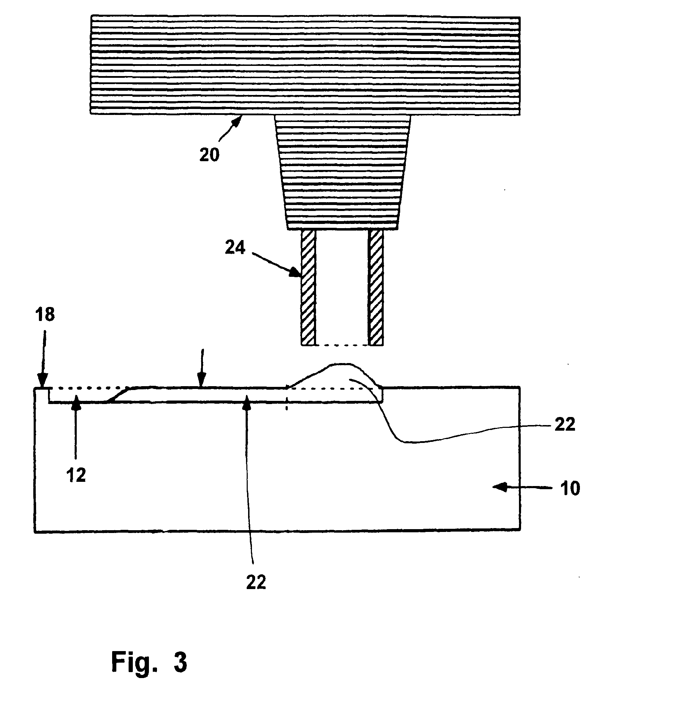

In Figur 3 ist gezeigt, wie das in Figur 2 dargestellte Wellenleiterbauteil, das im Zustand von Figur 2 lediglich aus einem Substrat mit Oberflächenstrukturierung besteht, weiterbehandelt wird, um ein Wellenleiterbauteil mit Wellenleiter zu erhalten. Mittels einer herkömmlichen, hier schematisch dargestellten Dosiervorrichtung 20 wird ein Tropfen flüssiges Wellenleitermaterial 22 in die Vorratskammer 14 eingefüllt. Als Wellenleitermaterial kann jeder optisch transparente Klebstoff verwendet werden, dessen Brechungsindex im ausgehärteten Zustand sich geeignet vom Brechungsindex des Materials des Substrates 10 unterscheidet, so daß ein Wellenleiter gebildet ist. Das flüssige Wellenleitermaterial 22 fließt von allein aus der Vorratskammer durch den Befüllkanal 16 in den Wellenleitergraben 12 und füllt diesen vollständig aus. Dabei stellt sich eine Oberfläche des Wellenleiters ein, die bündig mit der Oberfläche des Substrates abschließt und eben ist. In Figur 3 ist ein Zwischenzustand gezeigt, in welchem das flüssige Wellenleitermaterial 22 das Ende des Wellenleitergrabens 12 und damit den Substratsteg 18 noch nicht erreicht hat.

Der große Vorteil dieser Art der Befüllung des Wellenleitergrabens liegt darin, daß die Menge des in die Vorratskammer 14 eingebrachten Wellenleitermaterials unkritisch ist. Es muß lediglich soviel Material eingebracht werden, daß der Wellenleitergraben 12 und der entsprechende Befüllkanal 16 vollständig gefüllt sind. Es ist unerheblich, ob nach dem Aushärten des Wellenleitermaterials 22 mehr oder weniger Material in der Vorratskammer 14 zurückbleibt.

Im nächsten Schritt wird das flüssige Wellenleitermaterial 22 ausgehärtet. Dies kann auf eine beliebige, herkömmliche Art und Weise geschehen. Wenn das Wellenleitermaterial ausgehärtet ist, ist im Substrat ein Wellenleiter gebildet, der bündig mit der Oberfläche des Substrates abschließt.

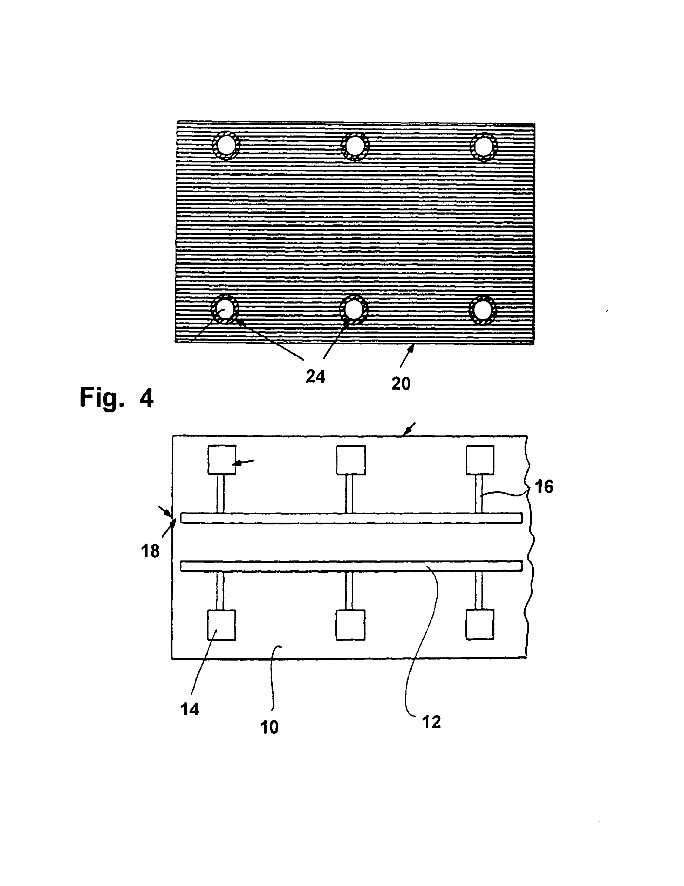

Zur Befüllung der Vorratskammern 14 des Substrates kann jede Vorratskammer eines Substrates sequentiell von der Dosiervorrichtung 20 angefahren werden. Alternativ kann entsprechend der in Figur 4 gezeigten Weiterbildung eine Dosiervorrichtung verwendet werden, die mit sovielen Dosierauslässen 24 versehen ist, wie das entsprechende Substrat Vorratskammern 14 aufweist. Auf diese Weise können alle Vorratskammern eines Substrates gleichzeitig mit dem flüssigen Wellenleitermaterial 22 befüllt werden.

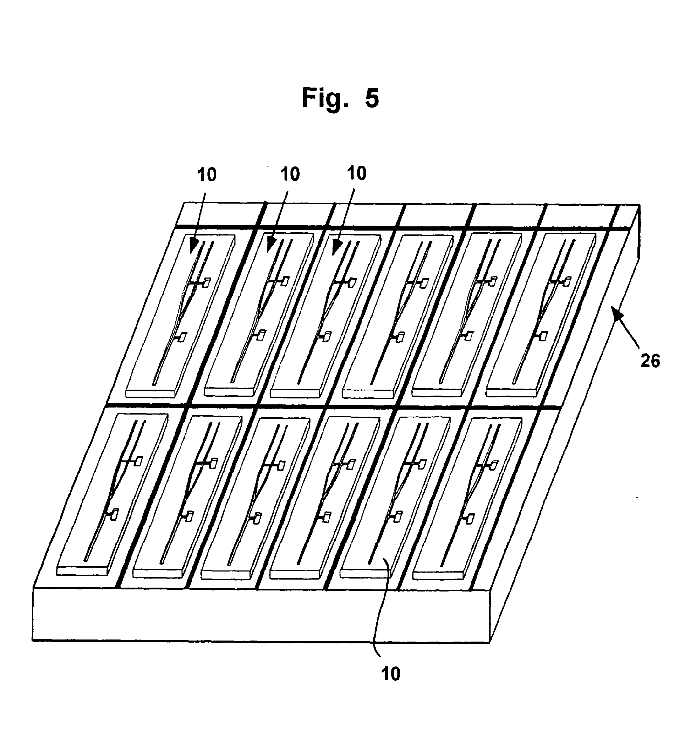

Gemäß der in Figur 5 gezeigten Weiterbildung können mehrere Substrate in ein Magazin 26 eingelegt werden, so daß sie später gemeinsam bearbeitet werden können. Beispielsweise können gleichzeitig alle Vorratskammern aller eingelegten Substrate mit dem flüssigen Wellenleitermaterial befüllt werden.

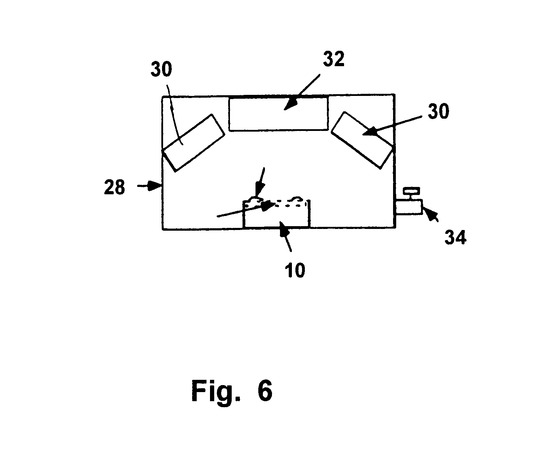

In Figur 6 ist schematisch eine Aushärtkammer 28 gezeigt, die zum Aushärten des in die Vorratskammern eingefüllten Wellenleitermaterials benutzt werden kann. Als Wellenleitermaterial ist insbesondere ein UV-Kleber geeignet, der im flüssigen Zustand erwärmt wird, damit er besser durch die Befüllkanäle und den Wellenleitergraben fließt. Zur Erwärmung des flüssigen Wellenleitermaterials ist hier ein Infrarotstrahler 30 vorgesehen. Zum Aushärten des flüssigen Wellenleitermaterials wird dieses mit UV-Strahlung bestrahlt. Diese wird von einem UV-Strahler 32 erzeugt. Nachdem der UV-Klebstoff so weit in den Wellenleitergraben hineingeflossen ist, daß er diesen vollständig ausfüllt, und anschließend ausgehärtet wurde, ist der Wellenleiter im Wellenleiterbauteil fertig.

Alternativ zur einem UV-Kleber kann auch ein thermisch aushärtbarer Kleber verwendet werden.

Mit dem Wellenleiter des fertigen Wellenleiterbauteils können dann Lichtleitfasern gekoppelt werden. Obwohl die Art und Weise der Ankopplung der Lichtleitfasern im Hinblick auf die Erfindung ohne Bedeutung ist, kann gemäß einem Ausführungsbeispiel vorgesehen sein, daß an die Stirnseite des Wellenleiterbauteils Glasfaserbändchen durch eine aktive Kopplung angebracht werden. Zu diesem Zweck muß die Stirnfläche von optischer Qualität sein, also eine sehr geringe Rauigkeit aufweisen. Der Substratsteg 18 zwischen dem Ende des Wellenleiters und der Stirnfläche ist bei der Ankopplung der Glasfaserbändchen kein großer Nachteil, da sich das im Wellenleiter geführte Licht im Bereich des Substratstegs nur sehr wenig aufweitet. Ebenfalls nicht nachteilig für die optische Qualität des Wellenleiterbauteils sind die Befüllkanäle; die durch sie sich ergebende zusätzliche Dämpfung dürfte in der Größenordnung von 0,02 dB liegen.

Bezugszeichenliste:
5: Masterteil
10: Substrat
12: Wellenleitergraben
14: Vorratskammer
16: Befüllkanal
18: Substratsteg
20: Dosiervorrichtung
22: Wellenleitermaterial
24: Dosierauslaß
26: Magazin
28: Aushärtkammer
30: Infrarotstrahler
32: UV-Strahler

## Patentansprüche

**1.** Integriert-optisches Wellenleiterbauteil mit einem Substrat (10) und mindestens einem Wellenleitergraben (12), der in dem Substrat ausgebildet ist, **dadurch gekennzeichnet, daß** in dem Substrat mindestens eine Vorratskammer (14) ausgebildet ist, die mit dem Wellenleitergraben (12) durch einen in dem Substrat (10) ausgebildeten Befüllkanal (16) in Verbindung steht.

**2.** Wellenleiterbauteil nach Anspruch 1, **dadurch gekennzeichnet, daß** das Substrat (10) aus einem Gußmaterial besteht.

**3.** Wellenleiterbauteil nach Anspruch 2, **dadurch gekennzeichnet, daß** das Substrat (10) aus einem Polymermaterial besteht.

**4.** Wellenleiterbauteil nach einem der vorhergehenden Ansprüche, **dadurch gekennzeichnet, daß** sich der Befüllkanal (16) etwa senkrecht zum Wellenleitergraben (12) erstreckt.

**5.** Wellenleiterbauteil nach einem der vorhergehenden Ansprüche, **dadurch gekennzeichnet, daß** der Befüllkanal (16) etwa dieselbe Breite und Tiefe wie der Wellenleitergraben (12) aufweist.

**6.** Wellenleiterbauteil nach einem der vorhergehenden Ansprüche, **dadurch gekennzeichnet, daß** das Substrat (10) eine dem Wellenleitergraben zugeordnete Stirnfläche mit optischer Qualität aufweist.

**7.** Wellenleiterbauteil nach Anspruch 6, **dadurch gekennzeichnet, daß** der Wellenleitergraben (12) vor der Stirnfläche endet.

**8.** Wellenleiterbauteil nach Anspruch 7, **dadurch gekennzeichnet, daß** der Wellenleitergraben (12) von der Stirnfläche durch einen Substratsteg (18) mit einer Breite von etwa 10 bis 20 µm getrennt ist.

**9.** Wellenleiterbauteil nach einem der vorhergehenden Ansprüche, **dadurch gekennzeichnet, daß** der Wellenleitergraben (12) eine Breite kleiner als etwa 50 µm hat.

**10.** Wellenleiterbauteil nach Anspruch 9, **dadurch gekennzeichnet, daß** der Wellenleitergraben (12) eine Breite von etwa 5 bis 10 µm hat.

**11.** Wellenleiterbauteil nach einem der vorhergehenden Ansprüche, **dadurch gekennzeichnet, daß** die Vorratskammer (14) eine rechteckige Form mit einer Kantenlänge von weniger als etwa 2000 µm hat.

**12.** Wellenleiterbauteil nach Anspruch 11, **dadurch gekennzeichnet, daß** die Kantenlänge etwa 1000 µm beträgt.

**13.** Wellenleiterbauteil nach einem der vorhergehenden Ansprüche, **dadurch gekennzeichnet, daß** mehrere Befüllkanäle (16) vorgesehen sind, die im Abstand von etwa 5 mm voneinander in den Wellenleitergraben (12) münden.

**14.** Wellenleiterbauteil nach einem der vorhergehenden Ansprüche, **dadurch gekennzeichnet, daß** der Wellenleitergraben (12) mit einem Wellenleitermaterial (22) gefüllt ist, das einen anderen Brechungsindex hat als das Substrat.

**15.** Wellenleiterbauteil nach Anspruch 14, **dadurch gekennzeichnet, daß** der Wellenleitergraben (12) bündig bis zur Oberfläche des Substrats (10) mit dem Wellenleitermaterial gefüllt ist.

**16.** Wellenleiterbauteil nach einem der Ansprüche 14 und 15, **dadurch gekennzeichnet, daß** auch der Befüllkanal (16) vollständig mit dem Wellenleitermaterial (22) gefüllt ist.

**17.** Wellenleiterbauteil nach einem der Ansprüche 14 bis 16, **dadurch gekennzeichnet, daß** die Vorratskammer (14) mindestens teilweise mit dem Wellenleitermaterial (22) gefüllt ist.

**18.** Wellenleiterbauteil nach einem der vorhergehenden Ansprüche, **dadurch gekennzeichnet, daß** an die Stirnfläche eine Lichtleitfaser angekoppelt ist.

**19.** Wellenleiterbauteil nach Anspruch 18, **dadurch gekennzeichnet, daß** an die Stirnfläche ein Faserbändchen angekoppelt ist. 20.Wellenleiterbauteil nach Anspruch 19, **dadurch gekennzeichnet, daß** an die Stirnfläche ein Glasfaserbändchen angekoppelt ist.

**21.** Wellenleiterbauteil nach einem der vorhergehenden Ansprüche, **dadurch gekennzeichnet, daß** die Oberfläche des Substrats (10) und der mit dem Wellenleitermaterial (22) gefüllte Wellenleitergraben (12) mit einer Deckschicht überzogen sind.

**22.** Wellenleiterbauteil nach Anspruch 21, **dadurch gekennzeichnet, daß** der Brechungsindex der Deckschicht kleiner als der Brechungsindex des Wellenleitermaterials und vorzugsweise gleich dem Brechungsindes des Substrats ist.

**23.** Verfahren zur Herstellung eines integriert-optischen Wellenleiterbauteils mittels der folgenden Schritte:
- es wird ein Substrat (10) bereitgestellt, das mit mindestens einem Wellenleitergraben (12), einer Vorratskammer (14) und einem Befüllkanal (16) versehen ist, der den Wellenleitergraben mit der Vorratskammer verbindet;
- in die Vorratskammer (14) wird eine vorbestimmte Menge eines aushärtbaren, optisch transparenten Wellenleitermaterials (22) eingebracht;
- es wird gewartet, bis das Wellenleitermaterial (22) aus der Vorratskammer (14) durch den Befüllkanal (16) in den Wellenleitergraben (12) fließt und diesen ausfüllt;
- das Wellenleitermaterial (22) wird ausgehärtet.

**24.** Verfahren nach Anspruch 23, **dadurch gekennzeichnet, daß** das Wellenleitermaterial (22) während des Schrittes des Wartens erwärmt wird.

**25.** Verfahren nach Anspruch 24, **dadurch gekennzeichnet, daß** das Wellenleitermaterial (22) einer Infrarotstrahlung ausgesetzt wird.

**26.** Verfahren nach einem der Ansprüche 23 bis 25, **dadurch gekennzeichnet, daß** das Wellenleitermaterial (22) einer UV-Strahlung ausgesetzt wird, um es auszuhärten.

**27.** Verfahren nach einem der Ansprüche 23 bis 25, **dadurch gekennzeichnet, daß** das Wellenleitermaterial (22) thermisch ausgehärtet wird.

**28.** Verfahren nach einem der Ansprüche 23 bis 27, **dadurch gekennzeichnet, daß** der Wellenleitergraben (12) in einer Stirnfläche des Substrates (10) mündet und vor dem Einfüllen des Wellenleitermaterials in die Vorratskammer der Wellenleitergraben an der Stirnfläche verschlossen wird.

**29.** Verfahren nach einem der Ansprüche 23 bis 28, **dadurch gekennzeichnet, daß** an die Stirnfläche des Substrates (10) eine Lichtleitfaser aktiv angekoppelt wird.

**30.** Verfahren nach einem der Ansprüche 23 bis 29, **dadurch gekennzeichnet, daß** auf die Oberfläche des Substrates (10) eine Deckschicht aufgebracht wird.
